# EUROPÄISCHE PATENTSCHRIFT

(11) **EP 3 923 854 B1**
(45) Veröffentlichungstag und Bekanntmachung des Hinweises auf die Patenterteilung: **22.11.2023**
(21) Anmeldenummer: 20714136.7
(22) Anmeldetag: 10.03.2020
(51) Int. Cl.: A61C 13/00, A61C 13/083

(54) **ROHLING ZUR HERSTELLUNG EINER DENTALEN RESTAURATION UND VERFAHREN ZU DESSEN HERSTELLUNG**
BLANK FOR PRODUCING A DENTAL RESTORATION AND METHOD FOR PRODUCING THE BLANK
ÉBAUCHE SERVANT À LA FABRICATION D'UNE RESTAURATION DENTAIRE, ET PROCÉDÉ POUR SA FABRICATION

(30) Priorität: 11.03.2019 DE 102019106143
(43) Veröffentlichungstag der Anmeldung: 22.12.2021
(73) Patentinhaber: Kulzer GmbH, 63450 Hanau (DE)
(72) Erfinder: UTTERODT, Andreas, 61267 Neu-Anspach (DE); NIKOLAUS, Achim, 63739 Aschaffenburg (DE)
(74) Vertreter: Bendele, Tanja
(86) Internationale Anmeldenummer: PCT/EP2020/056359
(87) Internationale Veröffentlichungsnummer: WO 2020/182816

(56) Entgegenhaltungen:
- EP-A1- 0 455 854
- EP-A1- 1 304 088
- WO-A1-99/13796
- DE-A1- 10 150 647
- DE-A1-102015 122 865

## Beschreibung

Gegenstand der Erfindung ist ein dentaler Rohling in Form eines dreidimensionalen Formkörpers zur Herstellung einer dentalen Restauration umfassend eine Vorform, welche eine Grundfläche und eine der Grundfläche gegenüberliegende Deckfläche sowie eine erste Seitenfläche und mindestens eine weitere Seitenfläche aufweist, wobei innerhalb der Vorform ein Lumen ausgebildet ist, welches sich von der Grundfläche in Richtung der Deckfläche bis zu einem zwischen der Grundfläche und der Deckfläche gelegenen Punkt P erstreckt, und der Punkt P zur Grundfläche den Abstand d1 und zur Deckfläche den Abstand d2 aufweist und das Verhältnis d1 zu d2 im Bereich von 1 : 1 bis 10 : 1 liegt. Ferner ist Gegenstand der Erfindung ein Verfahren zur Herstellung des dentalen Rohlings als auch dessen Verwendung in einem Material-abtragenden Fertigungsverfahren zur Herstellung einer dentalen Restauration.

Dentale Restaurationen, wie etwa prothetische Einzelzahnrekonstruktionen, werden bei dezentraler Fertigung unter Einsatz von CAD/CAM-Verfahren in der Regel auf Basis von standardisierten Rohlingen (sogenannten Blanks) in Material-abtragenden Fertigungsverfahren hergestellt. Diese Rohlinge aus dentalen Komposit-Materialien oder dentalen Keramiken sind daher derart ausgestaltet, dass sie in geometrischer Hinsicht im Wesentlichen alle denkbaren Gestaltungsformen an Zähnen aufnehmen können und sich vielmals lediglich in Farbe oder Transluzenz unterscheiden.

So offenbart die US8483857B2 ein Konvolut an Zahnrohlingen, welches zwar hinsichtlich der Farbgebung der einzelnen Zahnrohlinge, nicht aber in Bezug auf ihre äußere Geometrie variiert. Auch die WO2002009612A1 beschreibt geometrisch einheitliche Zahnrohlinge, welche jedoch aufgrund ihrer Mehrfarbigkeit die Ästhetik der jeweils herzustellenden dentalen Restaurationen verbessern sollen. EP0455854A1 offenbart einen Rohlingkörper zur Herstellung eines Zahnrestaurations-Paßkörpers, insbesondere einer Krone, mit einem ersten Abschnitt zur materialabtragenden Bearbeitung des Paßkörpers und einem zweiten Abschnitt zur Halterung des Rohlings in einer Bearbeitungsmaschine, wobei der erste Abschnitt in seiner axialen und radialen Ausdehnung so dimensioniert ist, daß aus diesem der Paßkörper und ein Halte- oder Stützkörper, auf den der Paßkörper nach Bearbeitung seiner äußeren Kontur und einer der Stützkörperkontur entsprechenden inneren Kontur aufsetzbar ist, herausgearbeitet werden können.

DE10150647A1 offenbart ein im Wesentlichen kegelstumpfförmiges Formelement mit Ausnehmung. DE102015122865A1 offenbart einen dentalen Rohling in Form eines vollgesinternten vorgeformten Formenelements und dessen Herstellungsverfahren.

Der Nachteil an diesen aus dem Stand der Technik bekannten, geometrisch einheitlichen Zahnrohlingen besteht allerdings darin, dass diese aus praktischen Erwägungen vielmals eine quaderförmige Standardgeometrie mit einem großzügigen Übermaß aufweisen, um zunächst sämtliche Ausgestaltungen an herzustellenden dentalen Restaurationen aufnehmen zu können. Dies führt jedoch in der Regel dazu, dass in Abhängigkeit von der anatomischen Situation im Mundraum des Patienten mehr als 90 % des Materials keine Verwendung finden und mühsam abgetragen, entsorgt und recycelt werden müssen, was sich insbesondere auch in einer länger andauernden Bearbeitungszeit niederschlägt. So ist vor der eigentlichen Bearbeitung der Form der herzustellenden dentalen Restauration zunächst ein mit erheblichem Verschleiß des jeweiligen Bearbeitungswerkzeugs verbundener zeitintensiver Materialabtrag erforderlich.

In diesem Zusammenhang ist zu beachten, dass bei der abtragenden Fertigung naturgemäß der Grad der Oberflächengüte, insbesondere in Hinblick auf glattere und homogenere Oberflächen mit geringerer Rauheit, ohnehin mit längeren Bearbeitungszeiten einhergeht. Um dem entgegenzuwirken kann bei klassischen Material-abtragenden Fertigungsverfahren, wie beispielsweise dem Fräsen, der Zeitaufwand durch die Wahl des jeweiligen Werkzeugs verringert werden, indem mit einem gröberen Fräswerkzeug zunächst das weit überschüssige Material beseitigt und anschließend ein feineres, präziseres Fräswerkzeug für die Annäherung an die Zielgeometrie verwendet wird. Neuere Bearbeitungstechnologien, wie beispielsweise die Verwendung von sehr kurz gepulster Laserenergie zum Materialabtrag (Laserablation), haben demgegenüber den Nachteil, dass sie zwar extrem hohe Oberflächengüten erzeugen können, der Materialabtrag und damit die Bearbeitungszeit aber entsprechend lange andauert. Zudem lassen sich Laser im Gegensatz zu den zuvor genannten Fräswerkzeugen aus Kostengründen nicht einfach austauschen. Daher ist es insbesondere bei den neuen Bearbeitungstechnologien wünschenswert, im Hinblick auf die Prozesseffizienz eine Verkürzung der Bearbeitungszeit durch Reduktion der abzutragenden Materialmenge bzw. des abzutragenden Volumens zu erzielen.

Hinsichtlich dieser Problemstellung ist beispielsweise in dem Bereich der Herstellung kompletter Prothesenbasen aus der DE102014105189A1 ein Prothesenbasisrohling bekannt, bei welchem ein Zahnbogen oder ein Zahnbogenabschnitt als Materialverdickung vorgeformt ist und die Abmessungen dieser Materialverdickung größer als eine Gruppe typischer zu fertigender Zahnbögen von Prothesenbasen einschließlich üblicher Toleranzen sind. Dies hat den Vorteil, dass mit einem solchen Prothesenbasisrohling trotz einer deutlichen Reduktion der abzutragenden Materialmenge zwischen 5 % und 100 % aller realistisch zu erwartender Prothesenbasen herstellbar sind.

In diesem Sinne liegt der vorliegenden Erfindung die Aufgabe zu Grunde, einen dentalen Rohling sowie ein Set umfassend den Rohling und einen digitalen Datensatz des Rohlings bereitzustellen, welcher bei möglichst geringem Materialeinsatz nahezu alle herzustellenden dentalen Restaurationen, wie prothetische Einzelzahnrekonstruktionen, aufnehmen kann. Insbesondere sollte eine alternative äußere Geometrie für einen dentalen Rohling für die CAD/CAM-gestützte abtragenden Herstellung von Einzelzähnen bereitgestellt werden, welche bei nahezu allen denkbaren Zahnformen, auch bei außergewöhnlich großen Zahnformen von Molaren, eine möglichst einfache, vollständige und kostengünstige Bearbeitung des Rohlings beziehungsweise eine möglichst einfache, vollständige und kostengünstige Herstellung des Einzelzahns ermöglicht. Darüber hinaus bestand die Aufgabe ein Material-abtragendes Fertigungsverfahren bereitzustellen, in welchem eine dentale Restauration unter optimaler Materialausnutzung des verwendeten dentalen Rohlings mit reduziertem zeitlichen und finanziellen Aufwand sowie geringem Verschleiß des Bearbeitungswerkzeugs hergestellt wird.

Die Aufgaben der Erfindung werden gelöst durch einen dentalen Rohling nach Anspruch 1 und das Set nach Anspruch 15, durch ein Verfahren zur Herstellung des dentalen Rohlings gemäß den Ansprüchen 11 und 12 sowie durch dessen Verwendung nach Anspruch 14. Bevorzugte Ausführungsformen der Erfindung sind in den Unteransprüchen sowie in der Beschreibung detailliert offenbart.

Erfindungsgemäß wird die Aufgabe der vorliegenden Erfindung dadurch gelöst, dass ein dentaler Rohling in Form eines dreidimensionalen Formkörpers umfassend eine Vorform bereitgestellt wird, innerhalb derer ein Lumen ausgebildet ist, das sich von der Grundfläche der Vorform in Richtung der Deckfläche der Vorform bis zu einem Punkt P erstreckt und das Verhältnis des Abstands des Punkts P zur Grundfläche zum Abstand des Punkts P zur Deckfläche im Bereich von 1 : 1 bis 1 : 10 liegt. Die Gestaltung des Rohlings zeichnet sich sowohl durch ihre geometrische Annäherung an die Form der herzustellenden dentalen Restauration, insbesondere der herzustellenden prothetischen Einzelzahnrekonstruktion, als auch durch ihre Anpassung an die Herstellungsanforderungen hinsichtlich der CAD/CAM-gestützten Material-abtragenden Fertigung aus. Dies hat den Vorteil, dass ein höherer Nutzungsgrad des eingesetzten Materials erzielt und eine schnellere und kostengünstigere Herstellung der jeweiligen dentalen Restauration, insbesondere bei der Nutzung neuerer Bearbeitungstechnologien, wie der Laserablation mit kurz gepulster Laserenergie, ermöglicht werden kann.

Im Rahmen der vorliegenden Erfindung wird unter dem Begriff Rohling - oder auch Blank - ein dreidimensionaler Formkörper, vorzugsweise ein dreidimensionaler Formkörper in Form eines Pyramidenstumpfes, verstanden, welcher für eine Material-abtragende Bearbeitung, insbesondere mittels CAD/CAM-Verfahren, geeignet ist. Der erfindungsgemäße dentale Rohling ist vorzugsweise der äußeren Geometrie der herzustellenden dentalen Restauration angenähert; insbesondere ist der Rohling derart vorgeformt, dass dessen äußere Gestalt die äußere Geometrie der dentalen Restauration vollständig aufnehmen kann und der Abstand zwischen der Oberfläche des Rohlings und der in den Rohling einbeschriebenen Oberfläche der dentalen Restauration minimal ist. Dabei ist es besonders bevorzugt, wenn das Volumen der entsprechend herzustellenden dentalen Restauration mindestens 90 % des Volumens des erfindungsgemäßen Rohlings einnimmt.

In diesem Sinne ist es erfindungsgemäß bevorzugt, wenn mithilfe eines erfindungsgemäßen Rohlings mindestens 50 %, insbesondere mindestens 70 %, weiter bevorzugt mindestens 80 % der realistisch zu erwartenden dentalen Restaurationen herstellbar sind.

Als dentale Restaurationen werden dabei prothetische Versorgungen, auch implantatgetragene prothetische Versorgungen, verstanden, die eine Wiederherstellung der Funktion, Integrität und Morphologie fehlender Zahnstrukturen gewährleisten können. Ihre jeweilige äußere Geometrie und Oberflächenstruktur ist von den anatomischen Gegebenheiten im Mundraum des zu behandelnden Patienten abhängig, wobei im Zuge der Behandlung eine möglichst natürliche, ästhetisch ansprechende Rekonstruktion des ursprünglichen Gebisses angestrebt wird. Die dentalen Restaurationen umfassen insbesondere Kronen, Inlays, Onlays, Superstrukturen, künstliche Zähne, Zahnbrücken, dentale Stege, Spacer, Abutments oder Veneers. Bevorzugte dentale Restaurationen umfassen prothetische Einzelzahnrekonstruktionen, insbesondere prothetische Einzelzahnrekonstruktionen von Front- oder Backenzähnen.

Die dentalen Restaurationen lassen sich vorzugsweise durch Material-abtragende Bearbeitung, insbesondere mittels CAD/CAM-Verfahren, aus einem erfindungsgemäßen Rohling herstellen. insbesondere lassen sich die dentalen Restaurationen aus der zum erfindungsgemäßen Rohling gehörigen Vorform herstellen, wobei die Vorform einen zu verändernden variablen Bereich des Rohlings darstellt. Der Rohling kann ferner auch einen kontinuierlichen Bereich, die Basis, umfassen, welcher während des Bearbeitungsvorgangs in der Regel nicht verändert wird. Nach einer Alternative ist es daher erfindungsgemäß bevorzugt, wenn der Rohling eine Basis mit einer Kontaktfläche und eine im Bereich der Kontaktfläche mit der Basis verbundene, insbesondere werkstoffeinstückig verbundene Vorform, umfasst.

Gegenstand der Erfindung ist somit ein dentaler Rohling in Form eines dreidimensionalen Formkörpers, insbesondere ein Fräsrohling, zur Herstellung einer dentalen Restauration, wie einer prothetischen Einzelzahnrekonstruktion, umfassend eine Vorform, wobei die Vorform eine Grundfläche und eine der Grundfläche gegenüberliegende Deckfläche sowie eine erste Seitenfläche und mindestens eine weitere Seitenfläche aufweist, wobei innerhalb der Vorform ein Lumen ausgebildet ist, welches sich von der Grundfläche in Richtung der Deckfläche bis zu einem zwischen der Grundfläche und der Deckfläche gelegenen Punkt P erstreckt, wobei der Punkt P zur Grundfläche den Abstand d1 und zur Deckfläche den Abstand d2 aufweist und das Verhältnis d1 zu d2 im Bereich von 1 : 1 bis 10 : 1 liegt.

Erfindungsgemäß umfasst der Rohling zumindest eine Vorform, welche eine Grundfläche und eine der Grundfläche gegenüberliegende Deckfläche sowie eine erste Seitenfläche und mindestens eine weitere Seitenfläche aufweist. Dabei sind aus produktionsökonomischer Sicht vorzugsweise sowohl die Grundfläche und/oder die Deckfläche als auch die erste Seitenfläche und/oder die mindestens eine weitere Seitenfläche planar. Es kann jedoch auch aus Gründen der möglichst exakten Annäherung an die Geometrie der herzustellenden dentalen Restauration bevorzugt sein, wenn die Grundfläche und/oder die Deckfläche gekrümmt, insbesondere konvex oder konkav, ist.

Somit ist eine Vorform im Sinne der vorliegenden Erfindung ein geometrischer Körper, dessen Oberfläche aus planaren und/oder gekrümmten Flächenstücken zusammengesetzt ist. Dabei ist es bevorzugt, wenn die Vorform ein Polyeder, insbesondere ein konvexes Polyeder, gegebenenfalls mit abgerundeten Ecken und/oder Kanten, ist. Weiter bevorzugt handelt es sich bei der Vorform um einen platonischen Körper, einen archimedischen Körper, einen catalanischen Körper, einen Johnson-Körper oder um ein Prisma bzw. Antiprisma. So kann die Vorform beispielsweis in Form eines Quaders bzw. Würfels oder als (modifizierte) Pyramide ausgebildet sein. Besonders bevorzugt liegt die Vorform in Form eines Prismatoids vor, insbesondere als Pyramidenstumpf.

Als Prismatoid wird erfindungsgemäß ein ebenflächig begrenzter geometrischer Körper mit paralleler, aber nicht zwangsläufig kongruenter Grund- und Deckfläche sowie mit Dreiecken oder Trapezen als Seitenflächen verstanden. In diesem Sinne besitzt ein erfindungsgemäßes Prismatoid eine Grund- und Deckfläche mit unterschiedlichem Flächeninhalt, wobei insbesondere die Deckfläche a) einen kleineren Flächeninhalt oder b) einen größeren Flächeninhalt als die Grundfläche aufweist. Ein bevorzugtes Prismatoid ist ausgewählt aus einem Pyramidenstumpf, vorzugsweise einem rechteckigen, insbesondere quadratischen, Pyramidenstumpf.

Erfindungsgemäß besonders bevorzugt ist daher ein dentaler Rohling in Form eines dreidimensionalen Formkörpers umfassend eine Vorform, wobei die Vorform eine Grundfläche und eine der Grundfläche gegenüberliegende Deckfläche sowie eine erste Seitenfläche und mindestens eine weitere Seitenfläche aufweist, wobei innerhalb der Vorform ein Lumen ausgebildet ist, welches sich von der Grundfläche in Richtung der Deckfläche bis zu einem zwischen der Grundfläche und der Deckfläche gelegenen Punkt P erstreckt, wobei der Punkt P zur Grundfläche den Abstand d1 und zur Deckfläche den Abstand d2 aufweist und das Verhältnis d1 zu d2 im Bereich von 1 : 1 bis 10 : 1 liegt, und wobei die Vorform in Form eines Prismatoids, insbesondere in Form eines Pyramidenstumpfes, ausgebildet ist. Vorzugsweise beträgt dabei der Flächeninhalt der Deckfläche des Prismatoids, insbesondere des Pyramidenstumpfs, a) zwischen 15 % und 85 %, vorzugsweise zwischen 50 % und 70 %, oder b) zwischen 120 % und 160 %, vorzugsweise zwischen 140 % und 150 %, des Flächeninhalts der Grundfläche des Prismatoids, insbesondere des Pyramidenstumpfs. Dies hat den Vorteil, dass der Abstand zwischen der Oberfläche des Rohlings und der in den Rohling einbeschriebenen Oberfläche der herzustellenden dentalen Restauration weiter minimiert werden kann, da sich üblicherweise Front- und vordere Backenzähne inzisal bzw. okklusal und hintere Backenzähne zervikal verjüngen.

Dabei wird als Grundfläche der Vorform dasjenige Flächenstück des geometrischen Körpers verstanden, das bei der herzustellenden dentalen Restauration die Unterseite, insbesondere die Gingival-Fläche (Subgingival- oder Supragingival-Fläche), darstellt, also im Zuge der Rekonstruktion des Gebisses eines zu behandelnden Patienten an das Zahnfleisch angrenzt. Bei der Grundfläche handelt es sich vorzugsweise um ein planares Polygon, insbesondere um ein planares konvexes Polygon, wie etwa ein Viereck, gegebenenfalls mit abgerundeten Ecken. Besonders bevorzugt ist die Grundfläche als orthogonales Polygon ausgebildet, insbesondere in Form eines Rechtecks, wobei die Länge und/oder Breite des Rechtecks, jeweils unabhängig voneinander im Bereich von 8 mm bis 14 mm, bevorzugt im Bereich von 9 mm bis 13 mm, besonders bevorzugt im Bereich von 10 mm bis 12 mm liegt.

Demgemäß ist in einer bevorzugten Ausführungsform der vorliegenden Erfindung, die Grundfläche der Vorform im Wesentlichen rechteckig ausgebildet und weist einen Flächeninhalt von größer gleich 60 mm² bis kleiner gleich 200 mm², vorzugsweise von größer gleich 100 mm² bis kleiner gleich 140 mm², auf. Optional ist es dabei weiter bevorzugt, wenn die Deckfläche der Vorform zudem a) eine Länge im Bereich von 5 mm bis 12 mm und eine Breite im Bereich von 3 mm bis 14 mm, bevorzugt eine Länge im Bereich von 7 mm bis 10 mm, besonders bevorzugt im Bereich von 8 mm bis 9 mm, und eine Breite im Bereich von 5 mm bis 12 mm, besonders bevorzugt im Bereich von 7 mm bis 10 mm, aufweist oder b) eine Länge und eine Breite im Bereich von 10 mm bis 16 mm, vorzugsweise im Bereich von 11 mm bis 15 mm, besonders bevorzugt im Bereich von 12 mm bis 14 mm, aufweist. Insbesondere ist dabei die Deckfläche der Vorform im Wesentlichen rechteckig ausgebildet und weist einen Flächeninhalt von größer gleich 10 mm² bis kleiner gleich 300 mm², vorzugsweise von größer gleich 70 mm² bis kleiner gleich 170 mm², auf.

Die Deckfläche der Vorform befindet sich erfindungsgemäß gegenüberliegend zu der Grundfläche der Vorform und entspricht der Oberseite, insbesondere der Inzisal- bzw. Okklusal-Fläche, der herzustellenden dentalen Restauration. Dementsprechend ist die Deckfläche im Zuge der Rekonstruktion des Gebisses eines zu behandelnden Patienten dasjenige Flächenstück, das je nach herzustellender Zahnform entweder zur Ausbildung einer Schneidkante oder zur Ausbildung einer Kaufläche vorgesehen ist. Dabei liegt die Deckfläche vorzugsweise in Form eins planaren Polygons, insbesondere in Form eines planaren konvexen, vorzugsweise orthogonalen, Polygons, vor, gegebenenfalls mit abgerundeten Ecken, wobei zwischen der Deckfläche und der Grundfläche nicht notwendigerweise eine Kongruenz besteht. Besonders bevorzugt ist die Deckfläche jedoch zumindest ähnlich zur Grundfläche ausgebildet.

In diesem Zusammenhang ist zu beachten, dass in Abhängigkeit von der herzustellenden Zahnform das Größenverhältnis von Grundfläche zu Deckfläche, insbesondere in Bezug auf den jeweiligen Flächeninhalt, variiert. So ist bevorzugt, wenn die Vorform a) für den Fall, dass sie zur Ausbildung eines Frontzahns, insbesondere eines Schneidezahns (Incisivus) oder Eckzahns (Caninus), oder eines vorderen Backenzahns (Prämolar) vorgesehen ist, eine Deckfläche mit einem kleineren Flächeninhalt als dem Flächeninhalt der Grundfläche oder b) für den Fall, dass sie zur Ausbildung eines hinteren Backenzahns (Molar) vorgesehen ist, eine Deckfläche mit einem größeren Flächeninhalt als dem Flächeninhalt der Grundfläche aufweist, insbesondere beträgt der Flächeninhalt der Deckfläche a) zwischen 15 % und 85 %, vorzugsweise zwischen 50 % und 70 %, oder b) zwischen 120 % und 160 %, vorzugsweise zwischen 140 % und 150 %, des Flächeninhalts der Grundfläche. Dabei ist es besonders bevorzugt, wenn die Deckfläche, wie auch die Grundfläche, in Form eines Rechtecks ausgebildet ist.

Die Deckfläche und die Grundfläche sind vorzugsweise derart angeordnet, dass ihre jeweiligen geometrischen Schwerpunkte, wie beispielsweise die jeweiligen Rechteckmittelpunkte, räumlich übereinanderliegen. Bevorzugt liegt dabei der Abstand zwischen der Deckfläche und der Grundfläche und damit auch die Höhe der Vorform im Bereich von 10 mm bis 20 mm, insbesondere bei etwa 15 mm. Die Deckfläche und die Grundfläche sind zudem vorzugsweise parallel zueinander angeordnet, so dass ihr Abstand zueinander einheitlich ist und die Vorform eine einheitliche Höhe besitzt. So ist in einer weiter bevorzugten Ausführungsform der vorliegenden Erfindung die Vorform in Form eines Pyramidenstumpfes mit einer Höhe von größer gleich 12 mm bis kleiner gleich 18 mm, bevorzugt größer gleich 13 mm bis kleiner gleich 17 mm, besonders bevorzugt größer gleich 14 mm bis kleiner gleich 16 mm, ausgebildet.

Besonders bevorzugt ist eine Vorform in Form eines Pyramidenstumpfes mit einer Höhe von größer gleich 12 mm bis kleiner gleich 18 mm, welcher eine Grundfläche in Form eines Rechtecks mit einer Länge und/oder Breite im Bereich von 8 mm bis 14 mm und eine Deckfläche in Form eines Rechtecks mit a) einer Länge im Bereich von 5 mm bis 12 mm und einer Breite im Bereich von 3 mm bis 14 mm oder b) einer Länge und einer Breite im Bereich von 10 mm bis 16 mm, aufweist.

In diesem Sinne entspricht die Höhe der Vorform im Minimum der incisocervikalen Ausdehnung der herzustellenden dentalen Restauration. Bei der Länge und Breite der Grundfläche bzw. der Deckfläche handelt es sich dementsprechend um die maximale untere oder obere mesiodistale und buccolinguale Ausdehnung der jeweiligen Restauration. Die dazwischenliegenden mesiodistalen und buccolingualen Ausdehnungen werden durch den Verlauf der ersten Seitenfläche und der mindestens einen weiteren Seitenfläche bestimmt, wobei die erste Seitenfläche der Distal-Fläche der herzustellenden dentalen Restauration entspricht.

Die erste Seitenfläche sowie die mindestens eine weitere Seitenfläche stellen die Mantelfläche der Vorform dar und verbinden dementsprechend die Grundfläche mit der Deckfläche. Dabei kann die Mantelfläche aus mindestens drei bis sechs Flächenstücken, wie etwa vier Flächenstücken, also der ersten Seitenfläche und mindestens zwei bis fünf weiteren Seitenflächen, insbesondere drei weiteren Seitenflächen, zusammengesetzt sein. Bei den Seitenflächen handelt es sich vorzugsweise um Polygone, insbesondere um planare, vorzugsweise konvexe, Polygone, gegebenenfalls mit abgerundeten Ecken. Besonders bevorzugt ist die erste Seitenfläche sowie die mindestens eine weitere Seitenfläche, insbesondere die zweite, dritte und vierte Seitenfläche, als Trapez ausgebildet, vorzugsweise als gleichschenkliges Trapez, wobei die jeweilige Länge der Grundseiten des Trapezes der Länge bzw. der Breite der Grundfläche und der Deckfläche entspricht. Dementsprechend ist eine besonders bevorzugte Vorform im Sinne der Erfindung ein rechteckiger, insbesondere quadratischer, Pyramidenstumpf, gegebenenfalls mit abgerundeten Ecken und/oder Kanten.

Erfindungsgemäß ist innerhalb der Vorform ein Lumen ausgebildet, welches sich von der Grundfläche in Richtung der Deckfläche bis zu einem zwischen der Grundfläche und der Deckfläche gelegenen Punkt P erstreckt. Unter Lumen im Sinne der Erfindung ist eine von der Grundfläche ausgehende Aushöhlung des Rohlings, insbesondere der Vorform, zu verstehen, wobei das Lumen mit Ausnahme seiner Öffnung zur Grundfläche die Oberfläche des Rohlings bzw. der Vorform nicht berührt. Demgemäß ist der Punkt P, bis zu dem sich das Lumen erstreckt, innerhalb der Vorform, das heißt räumlich zwischen der Grundfläche und der Deckfläche sowie zwischen der ersten Seitenfläche und der mindestens einen weiteren Seitenfläche, insbesondere der zweiten, dritten und vierten Seitenfläche, gelegen. Dabei beträgt der Abstand d1 des Punktes P zur Grundfläche mindestens 3 mm und/oder der Abstand d2 des Punktes P zur Deckfläche mindestens 0,5 mm. Insbesondere liegt der Abstand d1 im Bereich von 5 mm bis 15 mm, vorzugsweise im Bereich um 10 mm, und/oder der Abstand d2 liegt im Bereich von 1 mm bis 10 mm, vorzugsweise im Bereich um 5 mm. In diesem Zusammenhang liegt das Verhältnis d1 zu d2 erfindungsgemäß im Bereich von 1 : 1 bis 10 : 1, bevorzugt im Bereich von 2 : 1 bis 9 : 1, besonders bevorzugt im Bereich von 4 : 1 bis 8 : 1.

Dementsprechend durchbricht das Lumen die Oberfläche des Rohlings, insbesondere die Oberfläche der Vorform, lediglich im Bereich der Grundfläche, vorzugsweise in einem Winkel von größer gleich 30° bis kleiner gleich 60°. Die in diesem Zuge entstehende Querschnittsöffnung in der Grundfläche besitzt dabei vorzugsweise einen kleineren Flächeninhalt als die Grundfläche selbst. Dementsprechend weist das Lumen gemäß einer bevorzugten Ausführungsform der vorliegenden Erfindung eine Querschnittsöffnung in der Grundfläche mit einem Flächeninhalt von größer gleich 1 mm² bis kleiner gleich 50 mm², vorzugsweise größer gleich 5 mm² bis kleiner gleich 35 mm², besonders bevorzugt mit einem Flächeninhalt von größer gleich 10 mm² bis kleiner gleich 25 mm², auf.

Die Querschnittsöffnung kann zumindest teilweise die Geometrie eines Polygons, wie eines Dreiecks, Vierecks, Fünfecks oder Sechsecks, oder die Geometrie eines Kreises oder einer Ellipse aufweisen. Dabei ist besonders bevorzugt, wenn die Querschnittsöffnung in Form eines Rechtecks ausgebildet ist, welches jeweils unabhängig voneinander eine Länge und eine Breite von größer gleich 1 mm bis kleiner gleich 7 mm, bevorzugt von größer gleich 2 mm bis kleiner gleich 6 mm, besonders bevorzugt von größer gleich 3 mm bis kleiner gleich 5 mm, aufweist. Alternativ bevorzugt, kann die Querschnittsöffnung auch eine kreisförmige bis elliptische Geometrie aufweisen, insbesondere jeweils unabhängig voneinander mit einem Durchmesser bzw. Haupt- und Nebendurchmesser von größer gleich 1 mm bis kleiner gleich 7 mm, bevorzugt von größer gleich 2 mm bis kleiner gleich 6 mm, besonders bevorzugt von größer gleich 3 mm bis kleiner gleich 5 mm.

Dabei nimmt das Lumen ausgehend von der Querschnittsöffnung in der Grundfläche vorzugsweise die Form eines konvexen geometrischen Körpers, insbesondere die Form eines konvexen Polygons oder konvexen Rotationskörpers, dessen Höhe dem Abstand d1 des Punktes P zur Grundfläche entspricht, ein. In diesem Sinne ist es gemäß einer Ausführungsform der vorliegenden Erfindung weiter bevorzugt, wenn der Punkt P, bis zu dem sich das Lumen erstreckt, i) eine Spitze des Lumens darstellt, ii) Teil eines Firstes des Lumens ist, wobei die Länge des Firstes mindestens 0,1 mm bis höchstens 4,5 mm, vorzugsweise mindestens 2 mm bis 3 mm, beträgt, oder iii) in einem Dach des Lumens angeordnet ist, wobei der Flächeninhalt des Dachs im Bereich von 0,1 mm² bis 65 mm², vorzugsweise im Bereich von 10 mm² bis 35 mm², liegt. Gemäß Alternative i) handelt es sich bei dem Lumen daher vorzugsweise um eine Pyramide oder einen Kegel, insbesondere mit rechteckiger bzw. mit kreisförmiger oder elliptischer Grundfläche. Ferner kann das Lumen im Sinne von Alternative ii) die Form eines Prismas mit einer ungeraden Anzahl von Seitenflächen, insbesondere ein dreiseitiges Prisma, bei dem eine Seitenfläche der Querschnittsöffnung entspricht und die gegenüberliegende Kante zwischen den verbleibenden Seitenflächen den First des Lumens darstellt, einnehmen. Alternative iii) umfasst schließlich eine Ausgestaltung des Lumens, in welcher dieses vorzugsweise in Form eines Prismas oder Prismatoids, insbesondere als Quader oder rechteckiger Pyramidenstumpf, bzw. in Form eines Zylinders oder eines Kegelstumpfes, insbesondere mit kreisförmiger oder elliptischer Grundfläche, vorliegt. In diesem Fall weist das Dach jeweils unabhängig voneinander eine Länge und Breite bzw. einen Durchmesser oder Haupt- und Nebendurchmesser a) im Bereich von 0,1 mm bis 4,5 mm, bevorzugt von 1 mm bis 4 mm, besonders bevorzugt von 2 mm bis 3 mm, für den Fall, dass die Vorform zur Ausbildung eines Frontzahns oder eines vorderen Backenzahns vorgesehen ist, oder b) im Bereich von 0,1 mm bis 8 mm, bevorzugt 1 mm bis 7 mm, besonders bevorzugt 3 mm bis 6 mm, für den Fall, dass die Vorform zur Ausbildung eines hinteren Backenzahns vorgesehen ist, auf.

In einer besonders bevorzugten Ausführungsform der vorliegenden Erfindung umfasst der Rohling ferner eine Basis mit einer Kontaktfläche, wobei die Basis und die Vorform werkstoffeinstückig ausgebildet sind und die Kontaktfläche in der Ebene der ersten Seitenfläche angeordnet ist.

Erfindungsgemäß kann der dentale Rohling somit eine Vorform und eine mit dieser werkstoffeinstückig verbundene Basis umfassen. Dabei ist jedoch die Basis im Gegensatz zur Vorform für eine Material-abtragende Bearbeitung, insbesondere mittels CAD/CAM-Verfahren, im Zuge der Herstellung der dentalen Restauration eigentlich nicht vorgesehen, sondern wird nach Erhalt der dentalen Restauration aus der Vorform im Wesentlichen unverändert von dieser abgetrennt. Allerdings kann es erfindungsgemäß auch bevorzugt sein, wenn Teile der herzustellenden dentalen Restauration nötigenfalls auch aus der Basis gefräst werden können und so flexibler auf außergewöhnliche Zahngeometrien eingegangen werden kann.

Dabei handelt es sich bei der Basis vorzugsweise um einen Sockel in Form eines Prismas, insbesondere um ein gerades Prisma mit rechteckiger Grundfläche, oder in Form eines Zylinders, insbesondere um einen geraden Kreiszylinder, wobei die Deckfläche des Prismas oder des Zylinders zumindest teilweise der Kontaktfläche der Basis entspricht.

Die Kontaktfläche der Basis ist erfindungsgemäß in der Ebene der ersten Seitenfläche der Vorform, also in der Ebene desjenigen Flächenstücks der Vorform, das der Distal-Fläche der herzustellenden dentalen Restauration entspricht, angeordnet. Dies hat den Vorteil, dass eventuelle Mängel an der dentalen Restauration, die durch die Abtrennung der Basis von bearbeiteten Vorform entstehen, aufgrund ihrer interdentalen Positionierung im Mundraum des zu behandelnden Patienten nicht weiter ins Gewicht fallen. Vorzugsweise grenzt die Basis dabei nahtlos an die Vorform, insbesondere an die herzustellende dentale Restauration, an. Die Basis und die Vorform und/oder die Basis und die herzustellende dentale Restauration können aber auch durch einen Steg und eine umlaufende Ausnehmung voneinander getrennt sein und somit nicht direkt aneinander angrenzen. Dabei kann der Flächeninhalt der Kontaktfläche der Basis sowohl größer als auch kleiner als der Flächeninhalt der ersten Seitenfläche der Vorform sein. Allerdings besitzt ein erfindungsgemäßer Rohling, bei dem der Flächeninhalt der Kontaktfläche der Basis größer als der Flächeninhalt der ersten Seitenfläche der Vorform ist, eine erhöhte Stabilität und damit den Vorteil, dass die Abbruchgefahr aufgrund des durch das Fräswerkzeug im Zuge der Bearbeitung auf die Vorform ausgeübten Drucks gemindert und so eine einfache, vollständige und kostengünstige Herstellung des entsprechenden Einzelzahns gewährleistet werden kann.

Erfindungsgemäß besonders bevorzugt ist daher ein dentaler Rohling in Form eines dreidimensionalen Formkörpers umfassend eine Vorform, wobei die Vorform eine Grundfläche und eine der Grundfläche gegenüberliegende Deckfläche sowie eine erste Seitenfläche und mindestens eine weitere Seitenfläche aufweist, wobei innerhalb der Vorform ein Lumen ausgebildet ist, welches sich von der Grundfläche in Richtung der Deckfläche bis zu einem zwischen der Grundfläche und der Deckfläche gelegenen Punkt P erstreckt, wobei der Punkt P zur Grundfläche den Abstand d1 und zur Deckfläche den Abstand d2 aufweist und das Verhältnis d1 zu d2 im Bereich von 1 : 1 bis 10 : 1 liegt, wobei der Rohling ferner eine Basis mit einer Kontaktfläche umfasst, wobei die Basis und die Vorform werkstoffeinstückig ausgebildet sind und die Kontaktfläche in der Ebene der ersten Seitenfläche angeordnet ist und wobei der Flächeninhalt der Kontaktfläche der Basis größer als der Flächeninhalt der ersten Seitenfläche der Vorform ist.

insbesondere nimmt die Kontaktfläche der Basis die erste Seitenfläche der Vorform vollständig auf. Weiter bevorzugt ist der Flächeninhalt der Kontaktfläche der Basis mindestens 0,1 %, bevorzugt mindestens 10 %, besonders bevorzugt mindestens 50 %, größer als der Flächeninhalt der ersten Seitenfläche der Vorform. Vorzugsweise ist der Flächeninhalt der Kontaktfläche der Basis mindestens doppelt so groß wie der Flächeninhalt der ersten Seitenfläche der Vorform.

In diesem Zusammenhang ist es besonders bevorzugt, wenn die Grundfläche der Vorform zur Kontaktfläche der Basis in einem Winkel α und die Deckfläche der Vorform zur Kontaktfläche der Basis in einem Winkel β angeordnet ist. Gegenstand der Erfindung ist somit auch ein Rohling in Form eines dreidimensionalen Formkörpers zur Herstellung einer dentalen Restauration umfassend eine Basis mit einer Kontaktfläche und eine im Bereich der Kontaktfläche mit der Basis verbundene, insbesondere werkstoffeinstückig verbundene, Vorform, wobei die Vorform eine zur Kontaktfläche der Basis in einem Winkel α angeordnete Grundfläche und eine zur Kontaktfläche der Basis in einem Winkel β angeordnete Deckfläche sowie eine an die Kontaktfläche angrenzende, erste Seitenfläche und mindestens eine weitere Seitenfläche aufweist, wobei innerhalb der Vorform ein Lumen ausgebildet ist, welches sich von der Grundfläche in Richtung der Deckfläche bis zu einem zwischen der Grundfläche und der Deckfläche gelegenen Punkt P erstreckt, wobei der Punkt P zur Grundfläche den Abstand d1 und zur Deckfläche den Abstand d2 aufweist und das Verhältnis d1 zu d2 im Bereich von 1 : 1 bis 10 : 1 liegt. Vorzugsweise betragen dabei je nach herzustellender Zahnform der Winkel α und der Winkel β jeweils unabhängig voneinander mindestens 45° bis höchstens 135°, insbesondere a) mindestens 60° bis höchstens 90°, für den Fall, dass die Vorform zur Ausbildung eines Frontzahns oder eines vorderen Backenzahns vorgesehen ist, oder b) mindestens 90° bis höchstens 120°, für den Fall, dass die Vorform zur Ausbildung eines hinteren Backenzahns vorgesehen ist. Besonders bevorzugt sind der Winkel α und der Winkel β gleich groß, insbesondere betragen der Winkel α und der Winkel β jeweils 90°.

Sofern der dentale Rohling eine Basis umfasst, kann dieser gemäß einer weiteren bevorzugten Ausführungsform der vorliegenden Erfindung ferner mindestens ein im Bereich der Basis angeordnetes Referenzierungselement, insbesondere mindestens eine Ausnehmung und/oder mindestens eine Markierung, und/oder mindestens ein zusätzliches Halteelement aufweisen. Dabei ermöglicht das Referenzierungselement, welches beispielsweise in Form von in der Basis eingepassten Löchern oder in Form eines an der Basis angeordneten Barcodes oder RFID-Transponders (*radio-frequency* identification Transponders) vorliegen kann, eine eindeutige Positionierung des Rohlings in einer Vorrichtung zu dessen Material-abtragender Bearbeitung, insbesondere in einer CAM-Vorrichtung zum Fräsen oder zur Laserablation. Dies hat den Vorteil, dass der dentale Rohling wie auch die herzustellende dentale Restauration in der Regel keine Rotationssymmetrie aufweisen und es somit erforderlich ist, der entsprechenden Vorrichtung eine mithilfe eines Detektors, insbesondere mithilfe eines Barcode- oder RFID-Readers, wahrnehmbare Referenz für die jeweilige Position des Rohlings zur Verfügung zu stellen. Alternativ oder zusätzlich kann der Rohling zudem ein zusätzliches Halteelement zur Befestigung in der entsprechenden Vorrichtung aufweisen, welches vorzugsweise an die Basis geometrisch angepasst und insbesondere kraft- und/oder formschlüssig mit dieser verbunden ist. Besonders bevorzugt weist das zusätzliche Halteelement wiederum ein Referenzierungselement auf.

In einer weiteren bevorzugten Ausführungsform der vorliegenden Erfindung ist die Basis und/oder die Vorform, jeweils unabhängig voneinander, aus einem Material oder Hybridmaterial ausgewählt aus dentalem Kompositmaterial und/oder dentaler Keramik hergestellt oder besteht aus diesem, insbesondere aus einem Material oder Hybridmaterial umfassend dentale Polymere, wie PEEK (Polyetheretherketon), oder dentale Polymergemische mit anorganischen Füllstoffen, wie Poly(methyl)methacrylat mit Borsilikatgläsern und/oder Silikatkeramiken oder Oxidkeramiken, wie Aluminiumoxid, Magnesiumoxid, Lithiumdisilikat, Siliciumoxid, Titanoxid oder Zirkonoxid oder Gemischen dieser. Darüber hinaus kann es bevorzugt sein, wenn die Basis und/oder die Vorform sowie vorzugsweise die Oberfläche des Lumens mit einer antimikrobiellen Beschichtung versehen ist, insbesondere mit einer Beschichtung umfassend Iminopyridinium-Derivate, quaternäre Ammoniumsalze, Diphenylether, Pyrimidine, Bispyridine, Guanidine, Magainine, Cecropine, Defensine und/oder Histatine. Alternativ kann der antimikrobielle Wirkstoff in der Matrix des entsprechenden Materials oder Hybridmaterials vorliegen.

Ebenso Gegenstand der Erfindung ist ein Verfahren zur Herstellung eines dentalen Rohlings in Form eines dreidimensionalen Formkörpers, insbesondere eines Fräsrohlings, umfassend eine Vorform, welche vorzugsweise in Form eines Prismatoids, insbesondere in Form eines Pyramidenstumpfes, ausgebildet ist, mit einer Grundfläche und einer der Grundfläche gegenüberliegenden Deckfläche sowie einem innerhalb der Vorform ausgebildeten Lumen, welches sich von der Grundfläche in Richtung der Deckfläche bis zu einem zwischen der Grundfläche und der Deckfläche gelegenen Punkt P erstreckt, wobei der Punkt P zur Grundfläche den Abstand d1 und zur Deckfläche den Abstand d2 aufweist und das Verhältnis d1 zu d2 im Bereich von 1 : 1 bis 10 : 1 liegt, sowie optional umfassend mindestens eine mit der Vorform verbundene, insbesondere werkstoffeinstückig verbundene Basis, aus einem polymerisierbaren, dentalen Kompositmaterial, in dem
- ein polymerisierbares, dentales Kompositmaterial in eine druckfeste Gussform überführt wird,
- das polymerisierbare dentale Kompositmaterial in der druckfesten Gussform mit einem Druck im Bereich von 10 MPa bis 500 MPa, vorzugsweise mit einem Druck im Bereich von 125 MPa bis 250 MPa, beaufschlagt wird, und
- zumindest ein Teil der Gussform sowie das polymerisierbare Material definiert auf eine Temperatur von 90 bis 150 °C, insbesondere für 0,1 bis 60 Minuten, erhitzt werden, und optional
- der dentale Rohling, insbesondere die Vorform und optional die Basis, erhalten wird.

In diesem Zusammenhang wird unter einem polymerisierbaren, dentalen Kompositmaterial ein Material oder Hybridmaterial verstanden, das zur Durchführung einer polymerbildenden Reaktion, insbesondere unter Zuführung von Wärme, geeignet ist. Das polymerisierbare dentale Kompositmaterial wird vorzugsweise vorgewärmt, insbesondere auf eine Temperatur von 25 °C bis 50 °C, wie etwa 35 °C bis 45 °C, in die Gussform überführt. Dabei ist es bevorzugt, wenn die Gussform bereits auf 25 °C bis 45 °C, insbesondere auf 30 °C bis 40 °C, vortemperiert ist.

Anschließend kann das polymerisierbare, dentale Kompositmaterial in der Gussform heißisostatisch gepresst und polymerisiert, insbesondere heißisostatisch gepresst und thermisch gerichtet polymerisiert werden. Dabei wird der Druck, mit dem die Gussform beaufschlagt wird, während des Verfahrens vorzugsweise aufrechterhalten und je nach Notwendigkeit gegebenenfalls nachgeregelt. Die Temperatur, auf die zumindest ein Teil der Gussform sowie das polymerisierbare Material erhitzt werden, liegt vorzugsweise bei 110 °C bis 150 °C innerhalb von 30 Minuten bzw. bei 110 °C bis 140 °C innerhalb von 20 Minuten, insbesondere wird die Gussform und das polymerisierbare Material innerhalb von 15 Minuten auf 130 °C erhitzt.

Nach dem Abkühlen des nunmehr polymerisierten dentalen Kompositmaterials wird vorzugsweise ein erfindungsgemäßer dentaler Rohling erhalten.

Ein alternativer Gegenstand der vorliegenden Erfindung ist ein Verfahren zur Herstellung eines dentalen Rohlings in Form eines dreidimensionalen Formkörpers, insbesondere eines Fräsrohlings, umfassend eine Vorform, welche vorzugsweise in Form eines Prismatoids, insbesondere in Form eines Pyramidenstumpfes, ausgebildet ist, mit einer Grundfläche und einer der Grundfläche gegenüberliegenden Deckfläche sowie einem innerhalb der Vorform ausgebildeten Lumen, welches sich von der Grundfläche in Richtung der Deckfläche bis zu einem zwischen der Grundfläche und der Deckfläche gelegenen Punkt P erstreckt, wobei der Punkt P zur Grundfläche den Abstand d1 und zur Deckfläche den Abstand d2 aufweist und das Verhältnis d1 zu d2 im Bereich von 1 : 1 bis 10 : 1 liegt, sowie optional umfassend mindestens eine mit der Vorform verbundene, insbesondere werkstoffeinstückig verbundene Basis, aus einer dentalen Keramik, in dem
- ein sinterbares, dentales Keramikmaterial in eine druckfeste Gussform überführt wird,
- das sinterbare dentale Keramikmaterial in der druckfesten Gussform mit einem Druck im Bereich von 10 MPa bis 500 MPa beaufschlagt wird, und/oder
- zumindest ein Teil der Gussform sowie das dentale Keramikmaterial bei einer Temperatur von 500 °C bis 2500 °C, vorzugsweise bei einer Temperatur von 800 °C bis 1400 °C, gesintert wird und
- optional der dentale Rohling, insbesondere die Vorform und/oder die Basis, erhalten wird.

In diesem Zusammenhang wird unter einer sinterbaren, dentalen Keramik ein körniges und/oder pulverförmiges Material oder Hybridmaterial verstanden, das zur Verdichtung und Aushärtung im Zuge eines Sinterverfahrens geeignet ist. So kommen beispielsweise Silikatkeramiken oder Oxidkeramiken, wie Aluminiumoxid, Magnesiumoxid, Lithiumdisilikat, Siliciumoxid, Titanoxid oder Zirkonoxid oder Gemische dieser in Betracht. Bevorzugt wird das sinterbare, dentale Keramikmaterial in eine druckfeste Gussform überführt und in dieser mittels Pressens in Form gebracht. Dabei wird ein Grünling in Form eines erfindungsgemäßen dentalen Rohlings erhalten.

Anschließend kann das sinterbare, dentale Keramikmaterial gesintert werden, insbesondere unter Druck. Nach dem Abkühlen des nunmehr gesinterten dentalen Keramikmaterials wird vorzugsweise ein erfindungsgemäßer dentaler Rohling erhalten.

Gleichfalls Gegenstand der vorliegenden Erfindung ist daher ein dentaler Rohling erhältlich nach einem der erfindungsgemäßen Verfahren, insbesondere umfassend eine Vorform mit einer Grundfläche und einer der Grundfläche gegenüberliegenden Deckfläche sowie einem innerhalb der Vorform ausgebildeten Lumen, welches sich von der Grundfläche in Richtung der Deckfläche bis zu einem zwischen der Grundfläche und der Deckfläche gelegenen Punkt P erstreckt, wobei der Punkt P zur Grundfläche den Abstand d1 und zur Deckfläche den Abstand d2 aufweist und das Verhältnis d1 zu d2 im Bereich von 1 : 1 bis 10 : 1 liegt, sowie optional umfassend mindestens eine mit der Vorform verbundene, insbesondere werkstoffeinstückig verbundene Basis. Bevorzugt ist der Rohling, insbesondere die Vorform des Rohlings, in Form eines Prismatoids, insbesondere in Form eines Pyramidenstumpfes, vorzugsweise in Form eines rechteckigen, insbesondere quadratischen, Pyramidenstumpfes, ausgebildet. Dabei ist der Rohling vorzugsweise monochrom, insbesondere homogen und monochrom, und weist keine Lunker, Risse und/oder Hohlräume auf, die in einer Dimension eine Ausdehnung von 0,05 mm überschreiten. Besonders bevorzugte dentale Rohlinge sind nach einem Verfahren umfassend ein Polymerisationsverfahren oder ein Sinterverfahren erhältlich und weisen keine Hinterschnitte entlang der Achse des Entformungsvektors bei ihrer Herstellung in einer Gussform auf.

Der erhaltene Rohling kann zudem mit einem im Bereich der Basis angeordneten Referenzierungselement und/oder zusätzlichen Halteelement versehen werden. Demgemäß kann es erfindungsgemäß bevorzugt sein, wenn in die Basis Löcher eingepasst werden oder ein Barcode oder RFID-Transponder an der Basis angeordnet wird. Alternativ oder zusätzlich kann es zudem bevorzugt sein, wenn die Basis und ein zusätzliches Halteelement zusammengefügt, zusammengeklebt, zusammengeschweißt und/oder aneinandergeschmolzen werden.

Ferner ist Gegenstand der vorliegenden Erfindung die Verwendung des dentalen Rohlings in Form eines dreidimensionalen Formkörpers, insbesondere des Fräsrohlings, umfassend eine Vorform, welche vorzugsweise in Form eines Prismatoids, insbesondere in Form eines Pyramidenstumpfes, ausgebildet ist, mit einer Grundfläche und einer der Grundfläche gegenüberliegenden Deckfläche sowie einem innerhalb der Vorform ausgebildeten Lumen, welches sich von der Grundfläche in Richtung der Deckfläche bis zu einem zwischen der Grundfläche und der Deckfläche gelegenen Punkt P erstreckt, wobei der Punkt P zur Grundfläche den Abstand d1 und zur Deckfläche den Abstand d2 aufweist und das Verhältnis d1 zu d2 im Bereich von 1 : 1 bis 10 : 1 liegt, sowie optional umfassend mindestens eine mit der Vorform verbundene, insbesondere einstückig verbundene Basis, in einem Material-abtragenden Fertigungsverfahren zur Herstellung einer dentalen Restauration, wobei
i) der Rohling, insbesondere umfassend die Vorform und optional die Basis, sowie ein CAD-Modell der herzustellenden dentalen Restauration, vorzugsweise umfassend einen CAD/CAM-Datensatz mit der Geometrie der herzustellenden dentalen Restauration, der vorzugsweise über einen Intraoralscan der Mundhöhle des Patienten oder einen Scan des realen Modells des Kiefers des Patienten erhalten wurde, bereitgestellt wird,
ii) der Rohling unter Berücksichtigung des Lumens, insbesondere unter Berücksichtigung der Lage und Ausdehnung des Lumens innerhalb der Vorform sowie vorzugsweise der Koordinaten (x,y,z) der Oberfläche des Lumens in Relation zum Rohling, in einem Material-abtragenden CAM-Verfahren auf Basis des CAD-Modells der dentalen Restauration bearbeitet wird, und optional
iii) die Vorform von der Basis getrennt wird, und optional
iv) die dentale Restauration erhalten wird.

Als Material-abtragendes Fertigungsverfahren im Sinne der Erfindung ist eine subtraktive Fertigung zu verstehen, bei der dreidimensionale Formteile in einem automatisierten Prozess aus einem 3D-CAD/CAM-Datensatz hergestellt werden, wodurch eine hohe Individualisierung der herzustellenden dentalen Restauration erreicht werden kann. Dabei wird zur Herstellung der dentalen Restauration das Material des Rohlings gemäß einer bevorzugten Ausführungsform der erfindungsgemäßen Verwendung mittels Fräsens, Schneidens, Polierens, Brechens, Abplatzens und/oder Bohrens, insbesondere mittels Laserenergie, abgetragen. Eine bevorzugte Material-abtragende Fertigung umfasst somit beispielsweise Fräsen in einem Drei- bis Fünf-Achs-CNC-Verfahren und/oder ein Laserablationsverfahren.

Erfindungsgemäß wird bei der Material-abtragenden Fertigung in Schritt i) zunächst der dentale Rohling, insbesondere umfassend die Vorform und optional die Basis, bereitgestellt. Dabei ist es bevorzugt, wenn zunächst mindestens zwei Rohlinge, insbesondere mindestens zehn bis 25, unterschiedlich ausgestaltete dentale Rohlinge bereitgestellt werden und eine Auswahl zwischen den Rohlingen anhand eines Vergleichs des jeweiligen Quotienten des Volumens der herzustellenden dentalen Restauration und des Volumens des erfindungsgemäßen dentalen Rohlings getroffen wird. Insbesondere sollte das Volumen der herzustellenden dentalen Restauration mindestens 90 % des Volumens des erfindungsgemäßen Rohlings betragen.

Besonders bevorzugt wird zudem mindestens ein digitaler Datensatz, vorzugsweise ein CAD/CAM-Datensatz, umfassend die Daten der Geometrie des dentalen Rohlings bzw. der dentalen Rohlinge, vorzugsweise die Daten der Geometrie des virtuellen Modells des Rohlings bzw. der Rohlinge, insbesondere umfassend die Vorform und optional die Basis, sowie die Daten zur räumlichen Lage und Ausdehnung des Lumens innerhalb der Vorform, insbesondere die Daten der Koordinaten (x,y,z) der Oberfläche des Lumens in Relation zum virtuellen Modell des Rohlings bzw. der Rohlinge, bereitgestellt. Mithilfe dieses digitales Datensatzes ist es insbesondere möglich, das CAD-Modell der herzustellenden dentalen Restauration, vorzugsweise das virtuelle Modell der herzustellenden dentalen Restauration, in das virtuelle Modell des Rohlings einzubetten. Dabei wird das virtuelle Modell der dentalen Restauration vorzugsweise unter Berücksichtigung der räumlichen Lage und Ausdehnung des Lumens und unter Einhaltung eines definierten Abstands zwischen der Oberfläche des Rohlings, insbesondere der Oberfläche der Vorform bzw. der Oberfläche des Lumens, und der äußeren Oberfläche der herzustellenden Restauration eingebettet. Zudem ist es bevorzugt, wenn die Distal-Fläche der herzustellenden dentalen Restauration sich im Bereich der ersten Seitenfläche des Rohlings befindet.

Der dentale Rohling wird daraufhin in Schritt ii) unter Berücksichtigung des Lumens, insbesondere unter Berücksichtigung der Lage und Ausdehnung des Lumens innerhalb der Vorform, in einem Material-abtragenden CAM-Verfahren auf Basis des CAD-Modells der dentalen Restauration bearbeitet. Insbesondere kann zunächst ein gröberes Werkzeug zur Beseitigung des weit überschüssigen Materials und anschließend ein feineres, präziseres Werkzeug für die Annäherung an die Zielgeometrie der dentalen Restauration verwendet werden. In diesem Zusammenhang ist es besonders bevorzugt, wenn die Distal-Fläche der herzustellenden dentalen Restauration nahezu nahtlos an die im Wesentlichen nicht zu bearbeitende Basis angrenzt, da in diesem Fall ein Teil der Bearbeitungszeit eingespart werden kann. Jedoch kann es ebenso bevorzugt sein, wenn zunächst ein Steg zwischen der Vorform und der Basis bzw. zwischen der herzustellenden dentalen Restauration und der Basis ausgebildet wird und dieser anschließend durchtrennt wird.

In Schritt iii) wird nunmehr die Vorform, insbesondere die herzustellende dentale Restauration, von der Basis bzw. dem verbleibenden Rest der Basis getrennt, insbesondere mittels Scherens, Spaltens, Reißens, Brechens, Bruchtrennens und/oder Keilschneidens. Dabei kann es bevorzugt sein, wenn die Vorform bzw. die herzustellende dentale Restauration anschließend noch einmal mittels eines Material-abtragenden Fertigungsverfahrens bearbeitet wird, insbesondere um eine höhere Oberflächengüte zu erreichen.

Somit wird in Schritt iv) vorzugsweise die herzustellende dentale Restauration erhalten.

Nach einer besonders bevorzugten Ausführungsform wird die erfindungsgemäße Verwendung daher zur Herstellung von Kronen, Inlays, Onlays, Superstrukturen, künstlichen Zähnen, Zahnbrücken, dentalen Stegen, Spacern, Abutments oder Veneers eingesetzt. Bei diesen dentalen Restaurationen handelt es sich vorzugsweise um zahnfarbene und/oder zahnfleischfarbene prothetische Versorgungen mit der Geometrie und der Ästhetik zumindest eines Teils mindestens eines künstlichen Zahns und/oder des zugehörigen Zahnfleischs. Somit umfassen erfindungsgemäße dentale Restaurationen vorzugsweise prothetische Einzelzahnrekonstruktionen, insbesondere implantatgetragene prothetische Einzelzahnrekonstruktionen von Frontzähnen und vorderen bzw. hinteren Backenzähnen.

Gleichfalls Gegenstand der vorliegenden Erfindung ist ein Set, insbesondere zur erfindungsgemäßen Verwendung in einem Material-abtragenden Fertigungsverfahren, wie einem CAD/CAM-Verfahren, zur Herstellung einer dentalen Restauration, umfassend
- mindestens einen dentalen Rohling, vorzugsweise mindestens zwei, insbesondere mindestens zehn bis 25, unterschiedlich ausgestaltete dentale Rohlinge, in Form eines dreidimensionalen Formkörpers, umfassend eine Vorform, welche vorzugsweise in Form eines Prismatoids, insbesondere in Form eines Pyramidenstumpfes, ausgebildet ist, mit einer Grundfläche und einer der Grundfläche gegenüberliegenden Deckfläche sowie einem innerhalb der Vorform ausgebildeten Lumen, welches sich von der Grundfläche in Richtung der Deckfläche bis zu einem zwischen der Grundfläche und der Deckfläche gelegenen Punkt P erstreckt, wobei der Punkt P zur Grundfläche den Abstand d1 und zur Deckfläche den Abstand d2 aufweist und das Verhältnis d1 zu d2 im Bereich von 1 : 1 bis 10 : 1 liegt, sowie optional mindestens eine mit der Vorform verbundene, insbesondere werkstoffeinstückig verbundene Basis, und
- mindestens einen digitalen Datensatz, vorzugsweise einen CAD/CAM-Datensatz, insbesondere auf einem Datenträger, umfassend die Daten der Geometrie des dentalen Rohlings bzw. der dentalen Rohlinge, vorzugsweise die Daten der Geometrie des virtuellen Modells des Rohlings bzw. der Rohlinge, insbesondere umfassend die Vorform und optional die Basis, sowie die Daten zur räumlichen Lage und Ausdehnung des Lumens innerhalb der Vorform, insbesondere die Daten der Koordinaten (x,y,z) der Oberfläche des Lumens in Relation zum virtuellen Modell des Rohlings bzw. der Rohlinge.

Die Erfindung wird anhand der Figuren näher erläutert, ohne die Erfindung auf diese Ausführungsbeispiele zu begrenzen. Es zeigen:
- **Fig. 1:**: eine schematische Darstellung eines erfindungsgemäßen Rohlings **1** umfassend eine Vorform **3** mit einer in der Vorform **3** eingebetteten dentalen Restauration **10**
- **Fig. 2a - 2e:**: Ausführungsformen einer erfindungsgemäßen Vorform **3,** innerhalb derer verschiedene Lumen **4** ausgebildet sind
- **Fig. 3a, 3b:**: je eine schematische Darstellung eines erfindungsgemäßen dentalen Rohlings **1** in Außenansicht umfassend eine Basis **2** und eine Vorform **3**
- **Fig. 4a - 4c:**: je eine schematische Darstellung eines erfindungsgemäßen dentalen Rohlings **1** in Seitenansicht mit einer Basis **2** und einer Vorform **3** sowie optional einem Referenzierungselement **21** und/oder einem zusätzlichen Halteelement **22**
- **Fig. 5a, 5b:**: einen erfindungsgemäßen dentalen Rohling **1,** welcher nach erfolgreicher Bearbeitung eine Basis **2** und eine dentale Restauration **10** umfasst

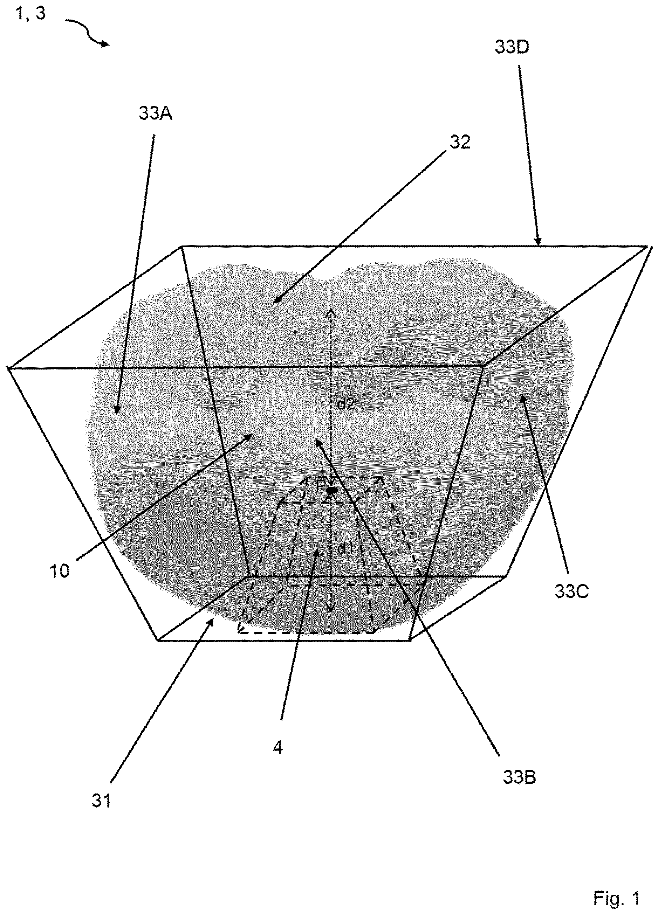

**Figur** 1 zeigt einen erfindungsgemäßen dentalen Rohling **1** in Form eines dreidimensionalen Formkörpers zur Herstellung einer dentalen Restauration **10.** Der Rohling **1** umfasst eine Vorform **3** mit der Geometrie eines rechteckigen Pyramidenstumpfes. Dementsprechend weist die Vorform **3** eine Grundfläche **31** und eine der Grundfläche **31** gegenüberliegende Deckfläche **32** sowie eine erste Seitenfläche **33A** und drei weitere Seitenflächen, insbesondere eine zweite Seitenfläche **33B,** dritte Seitenfläche **33C** und vierte Seitenfläche **33D,** auf. Da die Vorform **3** entsprechend der eingebetteten dentalen Restauration **10** zur Ausbildung eines hinteren Backenzahns vorgesehen ist, ist der Flächeninhalt der Deckfläche **32** größer als der Flächeneinhalt der Grundfläche **31.** Alternativ könnte aber auch der Flächeninhalt der Deckfläche **32** kleiner sein als der Flächeninhalt der Grundfläche **31,** insbesondere wenn die Vorform zur Ausbildung eines Fronzahnes oder eines vorderen Backenzahnes vorgesehen ist.

Innerhalb der Vorform **3** ist ein Lumen **4** ausgebildet, welches sich von der Grundfläche **31** in Richtung der Deckfläche **32** bis zu einem zwischen der Grundfläche **31** und der Deckfläche **32** gelegenen Punkt P erstreckt, wobei der Punkt P zur Grundfläche **31** den Abstand d1 und zur Deckfläche 32 den Abstand d2 aufweist und das Verhältnis von d1 zu d2 im Bereich von 1 : 1 bis 10 : 1 liegt. Dabei stellt die Ausgestaltung des Rohlings **1,** insbesondere der Vorform **3** mit dem Lumen **4,** eine Annäherung der äußeren Geometrie der herzustellenden dentalen Restauration **10** dar, wobei der Rohling **1** derart vorgeformt ist, dass dessen äußere Gestalt die äußere Geometrie der dentalen Restauration **10** vollständig aufnehmen kann und der Abstand zwischen der Oberfläche des Rohlings **1** und der in den Rohling **1** einbeschriebenen Oberfläche der dentalen Restauration **10** minimal ist. Besonders bevorzugt nimmt das Volumen der herzustellenden dentalen Restauration **10** daher mindestens 90 % des Volumens des erfindungsgemäßen Rohlings **1** ein.

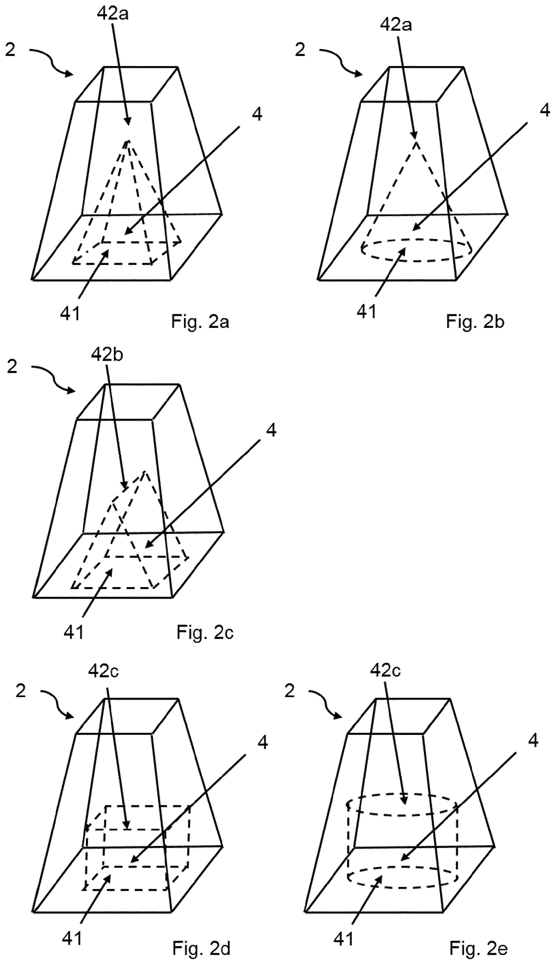

Die **Figuren 2a** bis **2e** zeigen jeweils eine erfindungsgemäße Vorform **3** in Form eines rechteckigen Pyramidenstumpfes, wobei innerhalb der Vorform **3** ein Lumen **4** mit einer Querschnittsöffnung **41** ausgebildet ist. Das Lumen **4** erstreckt sich von der Querschnittsöffnung **41** als untere Begrenzung bis zu seiner oberen Begrenzung in Form einer Spitze **42a,** eines Firstes **42b** oder eines Dachs **42c.** Dementsprechend handelt es sich bei dem Lumen **4** gemäß den **Figuren 2a** und **2b** um eine Pyramide mit quadratischer Grundfläche **41** bzw. um einen Kegel mit kreisförmiger Grundfläche **41** und einer Spitze **42a.** Das Lumen **4** nach **Figur 2c** hingegen ist als dreiseitiges Prisma ausgestaltet, wobei eine Seitenfläche des Prismas der Querschnittsöffnung **41** entspricht und die der Seitenfläche gegenüberliegende Kante zwischen den zwei verbleibenden Seitenflächen des Prismas einen First **42b** darstellt. Bei den Figuren **2d** und **2e** handelt es sich schließlich um ein Lumen **4** in Form eines Quaders bzw. um ein Lumen **4** in Form eines Zylinders. Die jeweilige Deckfläche entspricht einem Dach **42c.**

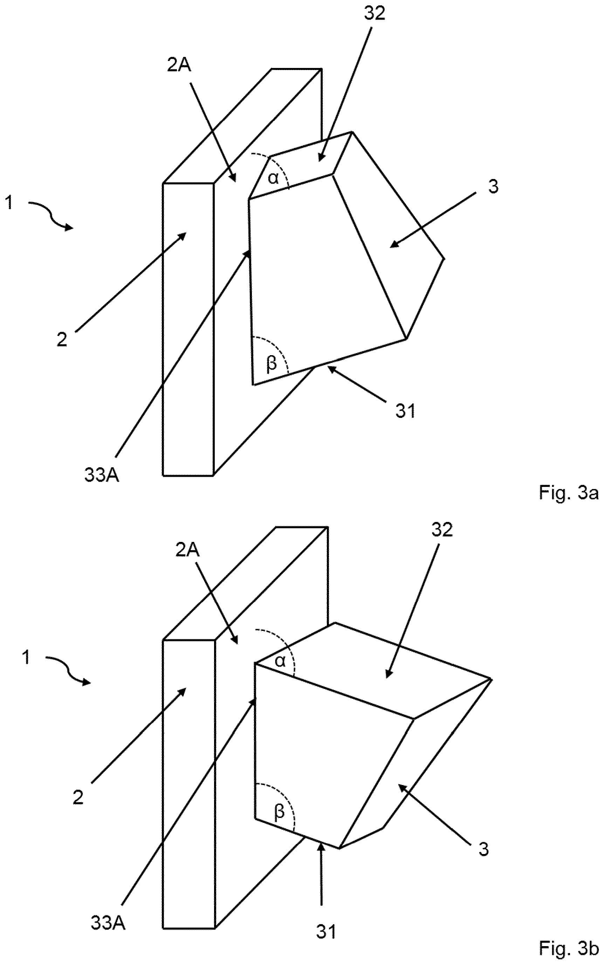

Die **Figuren 3a** und **3b** zeigen jeweils einen bevorzugten erfindungsgemäßen dentalen Rohling **1** in der Außenansicht, so dass das innenliegende Lumen nicht gezeigt ist. Der Rohling **1** umfasst eine Basis **2** mit einer Kontaktfläche **2A** und eine im Bereich der Kontaktfläche **2A** mit der Basis **2** verbundene, insbesondere werkstoffeinstückig verbundene, Vorform **3,** wobei die Vorform **3** eine zur Kontaktfläche **2A** der Basis **2** in einem Winkel α angeordnete Grundfläche **31** und eine zur Kontaktfläche **2A** der Basis **2** in einem Winkel β angeordnete Deckfläche **32** sowie eine an die Kontaktfläche **2A** angrenzende, erste Seitenfläche **33A** aufweist. Je nach herzustellender Zahnform betragen der Winkel α und der Winkel β jeweils unabhängig voneinander mindestens 60° bis höchstens 90° **(****Figur 3a****),** für den Fall, dass die Vorform **3** zur Ausbildung eines Frontzahns oder eines vorderen Backenzahns vorgesehen ist, oder mindestens 90° bis höchstens 120° **(****Figur 3b****),** für den Fall, dass die Vorform **3** zur Ausbildung eines hinteren Backenzahns vorgesehen ist. Dabei sind der Winkel α und der Winkel β vorzugsweise gleich groß.

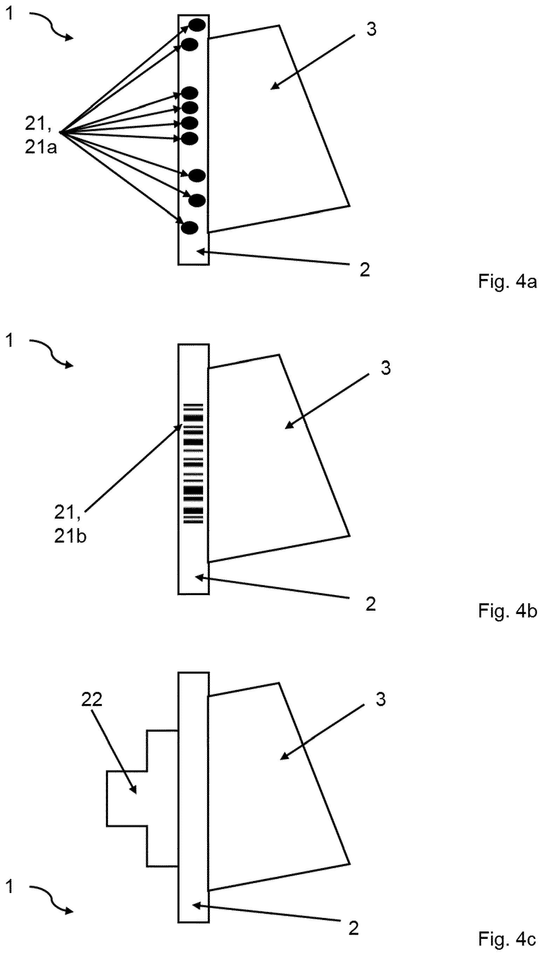

Die **Figuren 4a bis 4c** zeigen jeweils einen erfindungsgemäßen dentalen Rohling **1** in der Seitenansicht, wobei der Rohling **1** eine Basis **2** und eine Vorform **3** umfasst.

Die **Figuren 4a** und **4b** zeigen ferner ein im Bereich der Basis **2** angeordnetes Referenzierungselement **22,** welches entweder in Form von in der Basis **2** eingepassten Löchern **21a** oder in Form eines an der Basis **2** angeordneten Barcodes **22b** vorliegen kann. **Figur 4c** zeigt zudem ein im Bereich der Basis **2** angeordnetes zusätzliches Halteelement **22.**

Bei Verwendung des dentalen Rohlings **1** in einem Material-abtragenden Fertigungsverfahren, insbesondere zur Herstellung einer dentalen Restauration, kann der Rohling **1,** welcher wie auch die herzustellende dentale Restauration in der Regel keine Rotationssymmetrie aufweist, anhand des Referenzierungselements **21** von der entsprechenden Vorrichtung mithilfe eines Detektors, insbesondere mithilfe eines Barcode-Readers, identifiziert und eindeutig innerhalb der Vorrichtung positioniert werden. Alternativ oder zusätzlich kann der Rohling **1** zudem anhand des zusätzlichen Halteelements **22** innerhalb der entsprechenden Vorrichtung befestigt werden.

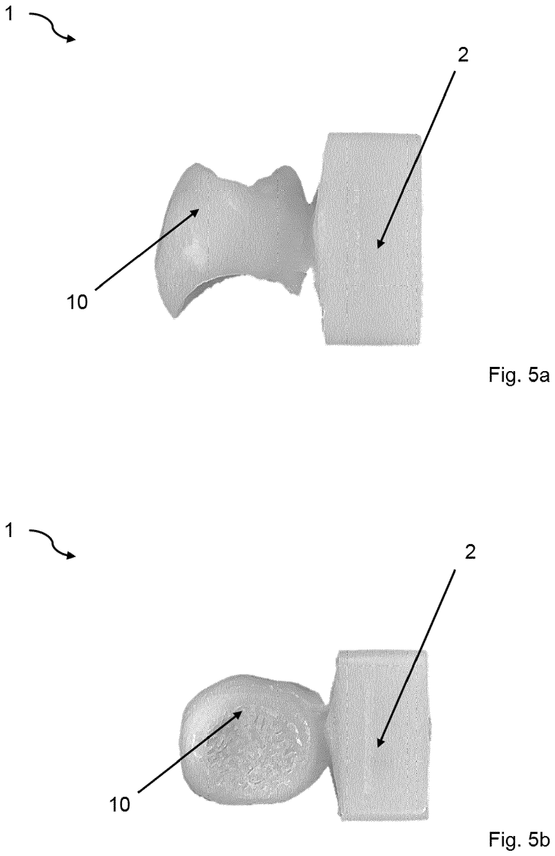

Die **Figuren 5a** und **5c** zeigen eine erfindungsgemäße dentale Restauration **10** als Teil des Rohlings **1** in der Seitenansicht und in der Draufsicht. Dabei ist die dentale Restauration **10** noch mit der Basis **2** verbunden und müsste in einem nächsten Schritt von dieser getrennt werden.

### Bezugszeichen:

- **1**: dentaler Rohling
- **2**: Basis mit Kontaktfläche **(2A)**
- **21**: Referenzierungselement, insbesondere Ausnehmung **(21a)** oder Markierung **(21b)**
- **22**: zusätzliches Halteelement
- **3**: Vorform
- **31**: Grundfläche
- **32**: Deckfläche
- **33**: Seitenflächen: **33A** erste Seitenfläche, **33B** zweite Seitenfläche, **33C** dritte Seitenfläche, **33D** vierte Seitenfläche
- **4**: Lumen
- **41**: Querschnittsöffnung des Lumens
- **42a**: Spitze des Lumens
- **42b**: First des Lumens
- **42c**: Dach des Lumens
- **10**: dentale Restauration

## Patentansprüche

1. Dentaler Rohling (1) in Form eines dreidimensionalen Formkörpers zur Herstellung einer dentalen Restauration (10) umfassend eine Vorform (3), wobei die Vorform (3) eine Grundfläche (31) und eine der Grundfläche (31) gegenüberliegende Deckfläche (32) sowie eine erste Seitenfläche (33A) und mindestens eine weitere Seitenfläche (33B, 33C, 33D) aufweist, wobei innerhalb der Vorform (3) ein Lumen (4) ausgebildet ist, welches sich von der Grundfläche (31) in Richtung der Deckfläche (32) bis zu einem zwischen der Grundfläche (31) und der Deckfläche (32) gelegenen Punkt P erstreckt, wobei der Punkt P zur Grundfläche (31) den Abstand d1 und zur Deckfläche (32) den Abstand d2 aufweist und das Verhältnis d1 zu d2 im Bereich von 1 : 1 bis 10 : 1 liegt, wobei der Rohling ferner eine Basis (2) mit einer Kontaktfläche (2A) umfasst, wobei die Basis (2) und die Vorform (3) werkstoffeinstückig ausgebildet sind und die Kontaktfläche (2A) in der Ebene der ersten Seitenfläche (33A) angeordnet ist, **dadurch gekennzeichnet, dass** die Vorform (3) in Form eines Pyramidenstumpfs vorliegt.

2. Rohling (1) nach Anspruch 1, **dadurch gekennzeichnet, dass** das Lumen (4) eine Querschnittsöffnung (41) in der Grundfläche (31) mit einem Flächeninhalt von größer gleich 1 mm² bis kleiner gleich 50 mm², vorzugsweise größer gleich 5 mm² bis kleiner gleich 35 mm², besonders bevorzugt mit einem Flächeninhalt von größer gleich 10 mm² bis kleiner gleich 25 mm², aufweist.

3. Rohling (1) nach Anspruch 1 oder 2, **dadurch gekennzeichnet, dass** der Punkt P, bis zu dem sich das Lumen (4) erstreckt,
i) eine Spitze (42a) des Lumens (4) darstellt,
ii) Teil eines Firstes (42b) des Lumens (4) ist, wobei die Länge des Firstes (42b) mindestens 0,1 mm bis höchstens 4,5 mm beträgt, oder
iii) in einem Dach (42c) des Lumens (4) angeordnet ist, wobei der Flächeninhalt des Dachs (42c) im Bereich von 0,1 mm² bis 65 mm² liegt.

4. Rohling (1) nach einem der Ansprüche 1 bis 3, **dadurch gekennzeichnet, dass** die Grundfläche (31) der Vorform (3) im Wesentlichen rechteckig ausgebildet ist und einen Flächeninhalt von größer gleich 60 mm² bis kleiner gleich 200 mm², vorzugsweise von größer gleich 100 mm² bis kleiner gleich 140 mm², aufweist und optional
die Deckfläche (32) der Vorform (3)
a) eine Länge im Bereich von 5 mm bis 12 mm und eine Breite im Bereich von 3 mm bis 14 mm aufweist oder
b) eine Länge und eine Breite im Bereich von 10 mm bis 16 mm aufweist.

5. Rohling (1) nach Anspruch 4, **dadurch gekennzeichnet, dass** die Deckfläche (32) der Vorform (3) im Wesentlichen rechteckig ausgebildet und einen Flächeninhalt von größer gleich 10 mm² bis kleiner gleich 300 mm², vorzugsweise von größer gleich 70 mm² bis kleiner gleich 170 mm², aufweist.

6. Rohling (1) nach einem der Ansprüche 1 bis 5, **dadurch gekennzeichnet, dass**
der Flächeninhalt der Deckfläche (32) des Pyramidenstumpfs, a) zwischen 15 % und 85 %, vorzugsweise zwischen 50 % und 70 %, oder b) zwischen 120 % und 160 %, vorzugsweise zwischen 140 % und 150 %, des Flächeninhalts der Grundfläche des Pyramidenstumpfs, beträgt.

7. Rohling (1) nach einem der Ansprüche 1 bis 6, **dadurch gekennzeichnet, dass** die Kontaktfläche (2A) der Basis (2) die erste Seitenfläche (33A) der Vorform (3) vollständig aufnimmt.

8. Rohling (1) nach einem der Ansprüche 1 bis 7, **dadurch gekennzeichnet, dass** der Flächeninhalt der Kontaktfläche (2A) der Basis (2) größer als der Flächeninhalt der ersten Seitenfläche (33A) der Vorform, insbesondere mindestens 0,1 %, bevorzugt mindestens 10 %, besonders bevorzugt mindestens 50 %, größer als der Flächeninhalt der ersten Seitenfläche der Vorform, ist.

9. Rohling (1) nach einem der Ansprüche 1 bis 8, **dadurch gekennzeichnet, dass** der Rohling (1) ferner mindestens ein im Bereich der Basis (2) angeordnetes Referenzierungselement (21), insbesondere mindestens eine Ausnehmung (21a) und/oder mindestens eine Markierung (21b), und/oder mindestens ein zusätzliches Halteelement (22) aufweist.

10. Rohling (1) nach einem der Ansprüche 1 bis 9, **dadurch gekennzeichnet, dass** die Basis (2) und die Vorform (3) aus einem Material oder Hybridmaterial ausgewählt aus dentalem Kompositmaterial und/oder dentaler Keramik hergestellt sind.

11. Verfahren zur Herstellung eines dentalen Rohlings (1) in Form eines dreidimensionalen Formkörpers nach einem der Ansprüche 1 bis 10, aus einem polymerisierbaren, dentalen Kompositmaterial, in dem
- ein polymerisierbares, dentales Kompositmaterial in eine druckfeste Gussform überführt wird,
- das polymerisierbare dentale Kompositmaterial in der druckfesten Gussform mit einem Druck im Bereich von 10 MPa bis 500 MPa, vorzugsweise mit einem Druck im Bereich von 125 MPa bis 250 MPa, beaufschlagt wird, und
- zumindest ein Teil der Gussform sowie das polymerisierbare Material definiert auf eine Temperatur von 90 bis 150 °C, insbesondere für 0,1 bis 60 Minuten, erhitzt werden.

12. Verfahren zur Herstellung eines dentalen Rohlings (1) in Form eines dreidimensionalen Formkörpers nach einem der Ansprüche 1 bis 10, aus einer dentalen Keramik, in dem
- ein sinterbares, dentales Keramikmaterial in eine druckfeste Gussform überführt wird,
- das sinterbare dentale Keramikmaterial in der druckfesten Gussform mit einem Druck im Bereich von 10 MPa bis 500 MPa beaufschlagt wird, und/oder
- zumindest ein Teil der Gussform sowie das dentale Keramikmaterial bei einer Temperatur von 500 °C bis 2500 °C, vorzugsweise bei einer Temperatur von 800 °C bis 1400 °C, gesintert wird.

13. Dentaler Rohling (1) erhältlich nach einem Verfahren nach einem der Ansprüche 11 oder 12.

14. Verwendung eines dentalen Rohlings (1) in Form eines dreidimensionalen Formkörpers nach einem der Ansprüche 1 bis 10 oder 13, in einem Materialabtragenden Fertigungsverfahren zur Herstellung einer dentalen Restauration (10), wobei
i) der Rohling (1), insbesondere umfassend die Vorform (3) und optional die Basis (2), sowie ein CAD-Modell der herzustellenden dentalen Restauration (10) bereitgestellt wird,
ii) der Rohling (1) unter Berücksichtigung des Lumens (4) in einem Materialabtragenden CAM-Verfahren auf Basis des CAD-Modells der dentalen Restauration (10) bearbeitet wird, und optional
iii) die Vorform (3) von der Basis (2) getrennt wird.

15. Set umfassend
- mindestens einen dentalen Rohling (1) in Form eines dreidimensionalen Formkörpers nach einem der Ansprüche 1 bis 10 oder 13, und
- mindestens einen digitalen Datensatz, insbesondere auf einem Datenträger, umfassend die Daten der Geometrie des dentalen Rohlings (1), insbesondere umfassend die Vorform (3) und die Basis (2), sowie die Daten zur räumlichen Lage und Ausdehnung des Lumens (4) innerhalb der Vorform (3).

## Claims

1. A dental blank (1) in the form of a three-dimensional molded body for producing a dental restoration (10) comprising a preform (3), wherein the preform (3) has a base surface (31) and a top surface (32) opposite to the base surface (31) as well as a first side surface (33A) and at least one further side surface (33B, 33C, 33D), wherein a lumen (4) is formed within the preform (3), that lumen (4) extends from the base surface (31) in the direction of the cover surface (32) to a point P located between the base surface (31) and the cover surface (32), wherein the point P being at a distance d1 from the base surface (31) and at a distance d2 from the cover surface (32), and the ratio d1 to d2 being in the range from 1 : 1 to 10 : 1, wherein in the blank further comprises a base (2) having a contact surface (2A), wherein the base (2) and the preform (3) being formed in one piece of material and the contact surface (2A) being arranged in the plane of the first side surface (33A), **characterized in that**, the preform (3) being in the form of a frustum of pyramid.

2. Blank (1) according to claim 1, **characterized in that**
the lumen (4) has a cross-sectional opening (41) in the base surface (31) with a surface area of greater than or equal to 1 mm² to less than or equal to 50 mm², preferably greater than or equal to 5 mm² to less than or equal to 35 mm², particularly preferably with an area of greater than or equal to 10 mm² to less than or equal to 25 mm .²

3. Blank (1) according to claim 1 or 2, **characterized in that**
the point P to which the lumen (4) extends,
i) represents a tip (42a) of the lumen (4),
ii) is part of a ridge (42b) of the lumen (4), the length of the ridge (42b) being at least 0.1 mm to at most 4.5 mm, or
iii) is disposed in a roof (42c) of the lumen (4), the area of the roof (42c) being in the range of 0.1 mm² to 65 mm²

4. Blank (1) according to any one of claims 1 to 3, **characterized in that** the base surface (31) of the preform (3) is substantially rectangular and has a surface area of greater than or equal to 60 mm² to less than or equal to 200 mm², preferably of greater than or equal to 100 mm² to less than or equal to 140 mm², and optionally the top surface (32) of the preform (3)
a) has a length in the range of 5 mm to 12 mm and a width in the range of 3 mm to 14 mm or
b) has a length and a width in the range of 10 mm to 16 mm.

5. Blank (1) according to claim 4, **characterized in that**
the cover surface (32) of the preform (3) is substantially rectangular and has a surface area of greater than or equal to 10 mm² to less than or equal to 300 mm², preferably of greater than or equal to 70 mm² to less than or equal to 170 mm²

6. Blank (1) according to any one of claims 1 to 5, **characterized in that** the surface area of the top surface (32) of the frustum of pyramid, is a) between 15% and 85%, preferably between 50% and 70%, or b) between 120% and 160%, preferably between 140% and 150%, of the surface area of the base surface of the frustum of pyramid.

7. Blank (1) according to any one of claims 1 to 6, **characterized in that** the contact surface (2A) of the base (2) completely receives the first side surface (33A) of the preform (3).

8. Blank (1) according to any one of claims 1 to 7, **characterized in that** the surface area of the contact surface (2A) of the base (2) is greater than the area of the first side surface (33A) of the preform, in particular at least 0.1%, preferably at least 10%, particularly preferably at least 50%, greater than the area of the first side surface of the preform.

9. Blank (1) according to one of claims 1 to 8, **characterized in that** the blank (1) further comprises at least one referencing element (21) arranged in the region of the base (2), in particular at least one recess (21a) and/or at least one marking (21b), and/or at least one additional holding element (22).

10. Blank (1) according to any of claims 1 to 9, **characterized in that** the base (2) and the preform (3) are made of a material or hybrid material selected from dental composite material and/or dental ceramic.

11. Method of producing a dental blank (1) in the form of a three-dimensional molded body according to any one of claims 1 to 10, from a polymerizable, dental composite material, in which
- a polymerizable dental composite material is transferred into a pressure-resistant mold,
- the polymerizable dental composite material in the pressure-resistant mold is subjected to a pressure in the range of 10 MPa to 500 MPa, preferably to a pressure in the range of 125 MPa to 250 MPa, and
- at least part of the mold and the polymerizable material are heated in a defined manner to a temperature of 90 to 150 °C, in particular for 0.1 to 60 minutes.

12. Method of producing a dental blank (1) in the form of a three-dimensional shaped body according to any one of claims 1 to 10, from a dental ceramic, in which
- a sinterable, dental ceramic material is transferred into a pressure-resistant casting mold,
- the sinterable dental ceramic material in the pressure-resistant casting mold is subjected to a pressure in the range from 10 MPa to 500 MPa, and/or
- at least part of the casting mold as well as the dental ceramic material is sintered at a temperature of 500 °C to 2500 °C, preferably at a temperature of 800 °C to 1400 °C.

13. Dental blank (1) obtainable by a method according to any one of claims 11 or 12.

14. Use of a dental blank (1) in the form of a three-dimensional shaped body according to one of claims 1 to 10 or 13, in a material-removing manufacturing process for producing a dental restoration (10), wherein
i) the blank (1), in particular comprising the preform (3) and optionally the base (2), and a CAD model of the dental restoration (10) to be produced are provided,
ii) the blank (1) is processed taking into account the lumen (4) in a material-removing CAM process based on the CAD model of the dental restoration (10), and optionally
iii) the preform (3) is separated from the base (2).

15. Set comprehensive
- at least one dental blank (1) in the form of a three-dimensional molded body according to any one of claims 1 to 10 or 13, and
- at least one digital data set, in particular on a data carrier, comprising the data of the geometry of the dental blank (1), in particular comprising the preform (3) and the base (2), as well as the data on the spatial position and extent of the lumen (4) within the preform (3).

## Revendications

1. Ébauche dentaire (1) sous la forme d'un corps moulé tridimensionnel pour la fabrication d'une restauration dentaire (10), comprenant une préforme (3), la préforme (3) présentant une surface de base (31) et une surface de recouvrement (32) opposée à la surface de base (31), ainsi qu'une première surface latérale (33A) et au moins une autre surface latérale (33B, 33C, 33D),
une lumière (4) étant formée à l'intérieur de la préforme (3), laquelle s'étend depuis la surface de base (31) en direction de la surface de recouvrement (32) jusqu'à un point P situé entre la surface de base (31) et la surface de recouvrement (32), le point P présentant la distance d1 par rapport à la surface de base (31) et la distance d2 par rapport à la surface de recouvrement (32) et le rapport entre d1 et d2 se situant dans la plage de 1 : 1 à 10 : 1, l'ébauche comprenant en outre une base (2) ayant une surface de contact (2A), la base (2) et la préforme (3) étant formées d'une seule pièce, la surface de contact (2A) étant située dans le plan de la première face latérale (33A), **caractérisée en ce que** la préforme (3) se présente sous la forme d'une pyramide tronquée.

2. Ébauche (1) selon la revendication 1, **caractérisée en ce que**
la lumière (4) présente une ouverture de section transversale (41) dans la surface de base (31), ayant une aire supérieure ou égale à 1 mm² et inférieure ou égale à 50 mm², de préférence supérieure ou égale à 5 mm² et inférieure ou égale à 35 mm², plus préférablement ayant une aire supérieure ou égale à 10 mm² et inférieure ou égale à 25 mm².

3. Ébauche (1) selon la revendication 1 ou 2, **caractérisée en ce que**
le point P jusqu'auquel s'étend la lumière (4),
i) représente une pointe (42a) de la lumière (4),
ii) fait partie d'un faîte (42b) de la lumière (4), la longueur du faîte (42b) étant d'au moins 0,1 mm et d'au plus 4,5 mm, ou
iii) est disposé dans un toit (42c) de la lumière (4), l'aire de surface du toit (42c) étant comprise dans la plage de 0,1 mm² à 65 mm².

4. Ébauche (1) selon l'une des revendications 1 à 3, **caractérisée en ce que** la surface de base (31) de la préforme (3) est essentiellement rectangulaire et présente une aire supérieure ou égale à 60 mm² et inférieure ou égale à 200 mm², de préférence supérieure ou égale à 100 mm² et inférieure ou égale à 140 mm², et éventuellement
la surface de recouvrement (32) de la préforme (3)
a) a une longueur comprise entre 5 mm et 12 mm et une largeur comprise entre 3 mm et 14 mm ou
b) a une longueur et une largeur comprises entre 10 mm et 16 mm.

5. Ébauche (1) selon la revendication 4, **caractérisée en ce que**
la surface de recouvrement (32) de la préforme (3) est essentiellement rectangulaire et présente une aire supérieure ou égale à 10 mm² et inférieure ou égale à 300 mm², de préférence supérieure ou égale à 70 mm² et inférieure ou égale à 170 mm².

6. Ébauche (1) selon l'une des revendications 1 à 5, **caractérisée en ce que**
l'aire de la surface de recouvrement (32) de la pyramide tronquée est a) comprise entre 15 % et 85 %, de préférence entre 50 % et 70 %, ou b) comprise entre 120 % et 160 %, de préférence entre 140 % et 150 %, de l'aire de la surface de base de la pyramide tronquée.

7. Ébauche (1) selon l'une des revendications 1 à 6, **caractérisée en ce que**
la surface de contact (2A) de la base (2) reçoit complètement la première surface latérale (33A) de la préforme (3).

8. Ébauche (1) selon l'une des revendications 1 à 7, **caractérisée en ce que**
l'aire de la surface de contact (2A) de la base (2) est supérieure à l'aire de la première surface latérale (33A) de la préforme, en particulier au moins 0,1 %, de préférence au moins 10 %, plus préférablement au moins 50 %, supérieure à l'aire de la première surface latérale de la préforme.

9. Ébauche (1) selon l'une des revendications 1 à 8, **caractérisée en ce que** l'ébauche (1) présente en outre au moins un élément de référencement (21) disposé dans la zone de la base (2), en particulier au moins un évidement (21a) et/ou au moins un marquage (21b), et/ou au moins un élément de retenue supplémentaire (22).

10. Ébauche (1) selon l'une des revendications 1 à 9, **caractérisée en ce que** la base (2) et la préforme (3) sont fabriquées dans un matériau ou un matériau hybride choisi parmi un matériau composite dentaire et/ou une céramique dentaire.

11. Procédé de fabrication d'une ébauche dentaire (1) sous la forme d'un corps moulé tridimensionnel selon l'une des revendications 1 à 10, à partir d'un matériau composite dentaire polymérisable, dans lequel
- un matériau composite dentaire polymérisable est transféré dans un moule résistant à la pression,
- le matériau composite dentaire polymérisable dans le moule résistant à la pression est soumis à une pression comprise entre 10 MPa et 500 MPa, de préférence à une pression comprise entre 125 MPa et 250 MPa, et
- au moins une partie du moule ainsi que le matériau polymérisable sont chauffés de manière définie à une température de 90 à 150 °C, en particulier pendant 0,1 à 60 minutes.

12. Procédé de fabrication d'une ébauche dentaire (1) sous la forme d'un corps moulé tridimensionnel selon l'une des revendications 1 à 10, à partir d'une céramique dentaire, dans lequel
- un matériau céramique dentaire frittable est transféré dans un moule résistant à la pression,
- le matériau céramique dentaire frittable dans le moule résistant à la pression est soumis à une pression comprise entre 10 MPa et 500 MPa, et/ou
- au moins une partie du moule ainsi que le matériau céramique dentaire sont frittés à une température de 500 °C à 2500 °C, de préférence à une température de 800 °C à 1400 °C.

13. Ébauche dentaire (1) pouvant être obtenue par un procédé selon l'une des revendications 11 ou 12.

14. Utilisation d'une ébauche dentaire (1) sous la forme d'un corps moulé tridimensionnel selon l'une des revendications 1 à 10 ou 13, dans un procédé de fabrication par enlèvement de matière pour la fabrication d'une restauration dentaire (10),
i) l'ébauche (1), comprenant notamment la préforme (3) et éventuellement la base (2), ainsi qu'un modèle CAO de la restauration dentaire (10) à fabriquer étant mis à disposition,
ii) l'ébauche (1) étant usinée compte tenu de la lumière (4) dans un procédé FAO d'enlèvement de matière sur la base du modèle CAO de la restauration dentaire (10), et éventuellement
iii) la préforme (3) étant séparée de la base (2).

15. Kit comprenant
- au moins une ébauche dentaire (1) sous la forme d'un corps moulé tridimensionnel selon l'une des revendications 1 à 10 ou 13, et
- au moins un jeu de données numériques, en particulier sur un support de données, comprenant les données de la géométrie de l'ébauche dentaire (1), en particulier comprenant la préforme (3) et la base (2), ainsi que les données concernant la position spatiale et l'expansion de la lumière (4) à l'intérieur de la préforme (3).
